# FASCICULE DE BREVET EUROPEEN

(11) **EP 4 177 139 B1**
(45) Date de publication et mention de la délivrance du brevet: **28.01.2026**
(21) Numéro de dépôt: 22201207.2
(22) Date de dépôt: 12.10.2022
(51) Int. Cl.: B62D 25/20, B62D 65/02, B62D 63/02, B62D 21/14

(54) **MÉTHODE DE FABRICATION D'UNE STRUCTURE DE VÉHICULE AUTOMOBILE**
VERFAHREN ZUR HERSTELLUNG EINER KRAFTFAHRZEUGSTRUKTUR
METHOD FOR MANUFACTURING A MOTOR VEHICLE STRUCTURE

(30) Priorité: 05.11.2021 FR 2111755
(43) Date de publication de la demande: 10.05.2023
(73) Titulaire: Renault s.a.s, 92100 Boulogne Billancourt (FR)
(72) Inventeur: DELORD, Christian, 78640 VILLIERS SAINT FREDERIC (FR); FARGEAS, Nicolas, 78640 VILLIERS SAINT FREDERIC (FR)

(56) Documents cités:
- EP-A2- 1 268 261
- DE-A1- 102014 211 534
- DE-A1- 2 610 299

## Description

L'invention se rapporte à une méthode de fabrication d'une structure de véhicule automobile, notamment, mais non exclusivement, pour les véhicules automobiles utilitaires légers.

Lors de la construction de ce type de véhicule automobile, il est courant d'avoir à réaliser deux versions différentes du même véhicule, une version longue et une version courte.

Ces deux versions peuvent être fabriquées sur la même chaîne de montage et les pièces des véhicules des deux versions sont, dans la mesure du possible, standard.

Afin de réaliser ce type de véhicule, on fabrique tout d'abord la structure comprenant un châssis et un plancher installé sur le châssis.

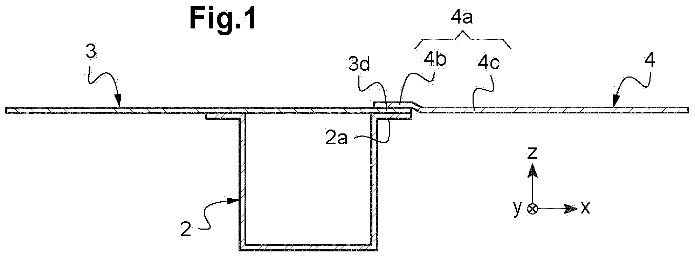

S'agissant de la fabrication d'une structure pour les véhicules automobiles courts, on fournit un châssis court s'étendant d'une extrémité avant à une extrémité arrière, et un plancher en deux parties, une partie avant, et une partie arrière se rejoignant au niveau d'une traverse. À titre d'illustration de l'art antérieur, on retrouve sur la figure 1, la traverse 2, laquelle présente une aile libre 2a orientée vers l'arrière, la partie de plancher avant 3 présentant une bordure arrière 3d en appui contre l'aile libre 2a. On retrouve également la partie de plancher arrière 4, dont la bordure avant 4a présente une zone libre transversale en décrochement 4b par rapport à une zone transversale 4c longeant la zone transversale libre 4b en arrière de la zone libre. Et la zone libre transversale en décrochement 4b vient en appui contre la bordure arrière 3d, tandis que la partie avant 3 et la partie arrière 4 de plancher s'étendent sensiblement dans un même plan.

Ainsi, la zone libre transversale en décrochement 4b en appui sur la bordure arrière 3d, elle-même en appui sur l'aile libre 2a, sont soudées ensemble par points.

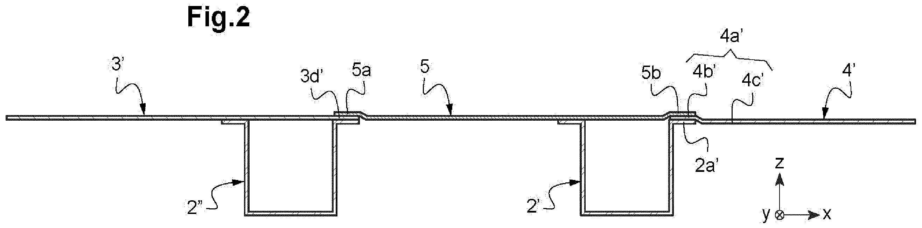

En revanche, lorsqu'il s'agit de véhicules automobiles longs, comme illustré sur la figure 2, si on fournit un châssis long présentant deux traverses, une arrière 2' et une avant 2" identiques à celles des versions courtes et espacées l'une de l'autre, et un plancher en trois parties, une partie avant 3' et une partie arrière 4' également identiques à celles des versions courtes, et qu'on relie ensuite ces deux parties ensemble par une allonge 5 rapportée, la zone libre transversale en décrochement 4b' est surélevée par rapport à l'aile libre 2a'. Et il est impossible de pouvoir souder par point, l'allonge 5, la zone libre 4b' et l'aile libre 2a'.

Partant, il est nécessaire de prévoir des traverses arrière différentes pour les versions longues de véhicule.

Toutefois, cette solution entraîne des moyens de réalisations spécifiques pour chaque plancher et des investissements supplémentaires pour la construction.

EP 1 268 261 A2 décrit un plancher de carrosserie de véhicule avec des caractéristiques de renfort et de soudage. Ce document met l'accent sur l'utilisation d'un profilé de renfort en forme de L pour renforcer la structure du plancher et traite également de la connexion et de l'assemblage de différentes parties du plancher.

Aussi, il existe un besoin d'une méthode de fabrication commune aux deux types de planchers et mettant en œuvre des pièces communes ne nécessitant pas de moyens de réalisation spécifique.

Dans ce but, et selon un premier objet, il est proposé une méthode de fabrication d'une structure de véhicule automobile allongé, comprenant les étapes suivantes :
- on fournit un châssis s'étendant longitudinalement entre une extrémité avant et une extrémité arrière, ledit châssis comprenant une traverse présentant une aile transversale libre s'étendant vers ladite extrémité arrière,
- on fournit un plancher comprenant une partie avant présentant une première bordure transversale arrière et une partie arrière présentant une première bordure transversale avant venant en applique sur ladite aile transversale libre, ladite première bordure transversale avant présentant une première zone libre transversale en décrochement par rapport à une première zone transversale longeant la première zone libre transversale,
- on fournit une allonge comprenant une deuxième bordure transversale arrière adaptée à venir en applique sur ladite première bordure transversale avant et une deuxième bordure transversale avant adaptée à venir en applique sur la première bordure transversale arrière pour relier ensemble ladite partie avant et ladite partie arrière de plancher,
- on soude ensemble par points la deuxième bordure transversale arrière et ladite aile libre transversale à travers ladite première bordure transversale avant. Et selon l'invention, la deuxième bordure transversale arrière présente une deuxième zone libre transversale et une zone transversale en U définissant un dégagement longeant la deuxième zone libre transversale, et on soude ensemble ladite deuxième zone libre transversale et ladite aile libre transversale à travers ladite première zone transversale de ladite première bordure avant.

Un avantage de l'invention est d'avoir ménagé une zone transversale en U dans la bordure transversale arrière de l'allonge. De la sorte, la conception des traverses, et des parties de plancher arrière et avant peuvent être analogues pour les versions de véhicules courts et de véhicules longs.

Avantageusement et de manière non limitative, ladite première zone libre transversale de ladite première bordure transversale avant vient se loger à l'intérieur dudit dégagement. De la sorte, la deuxième zone libre transversale de l'allonge peut venir en appui à plat sur la première zone transversale de la partie arrière du plancher.

Un avantage est que même si l'écart entre la première zone libre transversale et l'aile transversale libre subsiste, il est possible de souder ensemble les trois pièces là où se situe la deuxième zone transversale libre puisque celle-ci est en appui sur la première zone transversale laquelle est elle-même en appui sur l'aile libre de la traverse.

Avantageusement et de manière non limitative, la première zone transversale de la première bordure transversale avant vient en contact avec le châssis, tandis que la première zone libre transversale en décrochement est écartée du châssis. Comme on l'expliquera plus en détail dans la suite de la description, lors de la réalisation de la version courte des véhicules, avec une traverse identique, une première bordure transversale avant de plancher également identique, la première bordure transversale arrière de partie avant de plancher peut venir s'étendre précisément entre l'aile libre et la première zone libre transversale en décrochement. Et partant, la première zone libre transversale est en appui à plat sur la première bordure transversale arrière, laquelle est elle-même en appui à plat sur l'aile libre. Les points de soudure peuvent alors être réalisés sur la première zone libre transversale en décrochement ; et non plus sur la première zone transversale dans le cas des versions longues de véhicule.

Avantageusement et de manière non limitative, la première zone libre transversale en décrochement est décalée d'une distance sensiblement égale à l'épaisseur du plancher.

Le décrochement est réalisé par soyage, autrement dit, par une opération de double pliage de la première zone libre transversale par rapport à la première zone transversale de façon à ce que celles-ci définissent deux plans parallèles décalés d'une même distance.

Avantageusement et de manière non limitative, la deuxième zone libre transversale présente une largeur sensiblement égale à la largeur de la zone transversale en U.

Avantageusement et de manière non limitative, la zone transversale en U présente une profondeur sensiblement égale à deux fois l'épaisseur du plancher.

Un avantage est de pouvoir loger la première zone libre transversale précisément pour que les deux pièces s'assemblent et que la deuxième zone libre transversale et la première zone transversale située le long de la première zone libre transversale soient en contact l'une de l'autre.

Ainsi, il y aura bien trois couches successives en contact entre l'aile transversale libre, la première zone transversale et la deuxième zone libre transversale.

Avantageusement et de manière non limitative, la partie avant du plancher comprend une partie longitudinale central et deux parties longitudinales latérales.

Un avantage est de pouvoir découper la partie avant en plusieurs pièces à assembler qui seront plus facile à mettre en œuvre et à réaliser par emboutissage sur des presses conventionnelles puisqu'elles seront moins grandes.

Avantageusement et de manière non limitative, la traverse comprend un fond et deux parois opposées sensiblement parallèles entre elles, et, en ce que ladite aile transversale libre se prolonge en s'étendant en retour vers l'arrière par rapport à l'une des deux parois.

Avantageusement et de manière non limitative, la première zone libre transversale présente une largeur sensiblement inférieure à la largeur dudit dégagement.

Un avantage est de pouvoir loger la première zone libre transversale précisément à l'intérieur dudit dégagement pour que les deux pièces s'emboîte l'une dans l'autre.

Avantageusement et de manière non limitative, ledit châssis comprend une autre traverse venant en contact avec ladite première bordure transversale arrière.

Selon un autre objet, il est proposé une structure de véhicule automobile allongé, comprenant :
- un châssis s'étendant longitudinalement entre une extrémité avant et une extrémité arrière, ledit châssis comprenant une traverse présentant une aile transversale libre s'étendant vers ladite extrémité arrière,
- un plancher comprenant une partie avant présentant une première bordure transversale arrière et une partie arrière présentant une première bordure transversale avant venant en applique sur ladite aile transversale libre, ladite première bordure transversale avant présentant une première zone libre transversale en décrochement par rapport à une première zone transversale longeant la première zone libre transversale,
- une allonge comprenant une deuxième bordure transversale arrière adaptée à venir en applique sur ladite première bordure transversale avant et une deuxième bordure transversale avant adaptée à venir en applique sur la première bordure transversale arrière pour relier ensemble ladite partie avant et ladite partie arrière de plancher, la deuxième bordure transversale arrière et ladite aile libre transversale étant soudées ensemble par points à travers ladite première bordure transversale avant. La deuxième bordure transversale arrière présente une deuxième zone libre transversale et une zone transversale en U définissant un dégagement longeant la deuxième zone libre transversale, ladite deuxième zone libre transversale et ladite aile libre transversale étant soudés ensemble à travers ladite première zone transversale de ladite première bordure avant.

Préférentiellement, ladite première zone libre transversale de ladite première bordure transversale avant vient se loger à l'intérieur dudit dégagement.

En outre, avantageusement, ladite première zone transversale de la première bordure transversale avant vient en contact avec ledit châssis, tandis que la première zone libre transversale en décrochement est écartée dudit châssis.

Aussi, selon une caractéristique de mise en œuvre particulièrement avantageuse, la première zone libre transversale en décrochement est décalée d'une dimension sensiblement égale à l'épaisseur du plancher.

Par ailleurs, selon une autre caractéristique de mise en œuvre particulièrement avantageuse la deuxième zone libre transversale présente une largeur sensiblement égale à la largeur de zone transversale en U.

D'autres particularités et avantages de l'invention ressortiront à la lecture de la description faite ci-après de plusieurs modes de réalisation particulier de l'invention, donné à titre indicatif mais non limitatif, en référence aux dessins annexés sur lesquels :
[Fig. 1] est une vue schématique partielle d'une section axiale d'une structure d'un véhicule automobile selon un mode de réalisation conformément à l'art antérieur ;
[Fig. 2] est une vue schématique partielle d'une section axiale d'une structure d'un véhicule automobile selon un autre mode de réalisation conformément à l'art antérieur ;
[Fig. 3] est une vue schématique en perspective de côté d'une structure d'un véhicule automobile selon un mode de mise en œuvre de l'invention ;
[Fig. 4] est une vue schématique de détail en coupe axiale de la figure 3 ; et,
[Fig. 5] est une vue schématique partielle en coupe axiale d'une structure d'un véhicule automobile selon un autre mode de mise en œuvre de l'invention.

L'invention concerne une méthode de fabrication d'une structure de véhicule automobile, selon une version longue en utilisant des moyens communs permettant de réaliser aussi une version courte. L'invention concerne également une structure de véhicule automobile obtenue conformément à ladite méthode de fabrication.

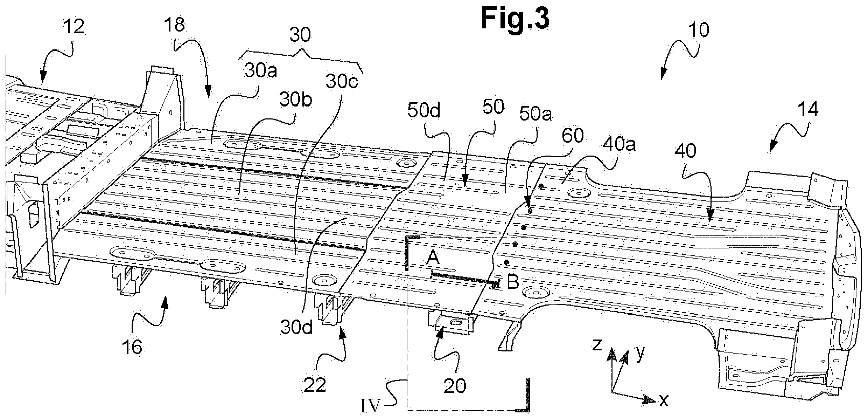

La figure 3 illustre une structure 10 d'un véhicule automobile en version longue ou allongée, obtenue selon la méthode de fabrication conforme à l'invention.

Aussi, au regard du repère (x, y, z), le véhicule automobile s'étant longitudinalement de l'avant vers l'arrière selon l'axe x, de la gauche vers la droite en situation de conduite, selon l'axe y et verticalement à l'opposé de la surface d'appui selon l'axe z.

La structure 10 comprend un châssis 16 surmonté d'un plancher 18 s'étendant d'une extrémité avant 12 à une extrémité arrière 14. Dans ce type de véhicule, le compartiment moteur est situé vers l'extrémité avant 12, tandis que la zone cargo est située vers l'extrémité arrière 14.

Le châssis 16 comprend des longerons, non représentés, s'étendant longitudinalement de l'extrémité avant 12 vers l'extrémité arrière 14 de la structure 10.

Au surplus, il comprend une traverse arrière 20 s'étendant longitudinalement entre l'extrémité avant 12 et l'extrémité arrière 14 et reliant ensemble les deux longerons du plancher 18.

Le châssis 16 comprend aussi au moins une autre traverse 22 sensiblement parallèle à ladite traverse arrière 20.

Le plancher 18 quant à lui comprend une partie avant 30 et une partie arrière 40 situés au niveau respectivement de l'extrémité avant 12 et de l'extrémité arrière 14.

La partie avant 30 du plancher comprend une partie longitudinale centrale 30b et deux parties longitudinales latérales 30a, 30c. La partie avant 30 présente une première bordure transversale arrière 30d venant en appui sur ladite au moins une autre traverse 22.

Quant à la partie arrière 40, elle présente une première bordure transversale avant 40a, laquelle vient en appui sur ladite traverse arrière 20 comme on l'expliquera plus en détail ci-après.

Selon la méthode de fabrication de la structure 10 conforme à l'invention, en version longue, dans laquelle la première bordure transversale arrière 30d est espacée de la première bordure transversale avant 40a, on fournit une allonge 50 présentant une deuxième bordure transversale avant 50d et une deuxième bordure transversale arrière 50a.

L'allonge 50 est portée en appui sur le châssis 16, après que la première bordure transversale arrière 30d a été portée en appui sur ladite autre traverse 22 et que la première bordure transversale avant 40a a été portée en appui sur ladite traverse arrière 20.

Ainsi, la deuxième bordure transversale avant 50d de l'allonge 50 vient en applique sur la première bordure arrière 30d de la partie avant 30 du plancher 18, tandis que la deuxième bordure transversale arrière 50a de l'allonge 50 vient en applique sur la première bordure avant 40a de la partie arrière 40 du plancher 18, pour relier ensemble les parties avant 30 et arrière 40.

Ensuite on soude par points 60 les trois épaisseurs entre elles au niveau des bordures pour les relier ensemble comme on va l'expliquer en détail ci-après.

Les points de soudure sont réalisés au moyen d'une pince de soudage comprenant deux électrodes. Les deux électrodes se terminent par des extrémités libres permettant de venir pincer localement les trois épaisseurs en applique des une contre les autres et elles sont alors adaptées à être soumises à une forte différence de potentiel permettant de provoquer ainsi localement la fusion du matériau métallique des différentes épaisseurs.

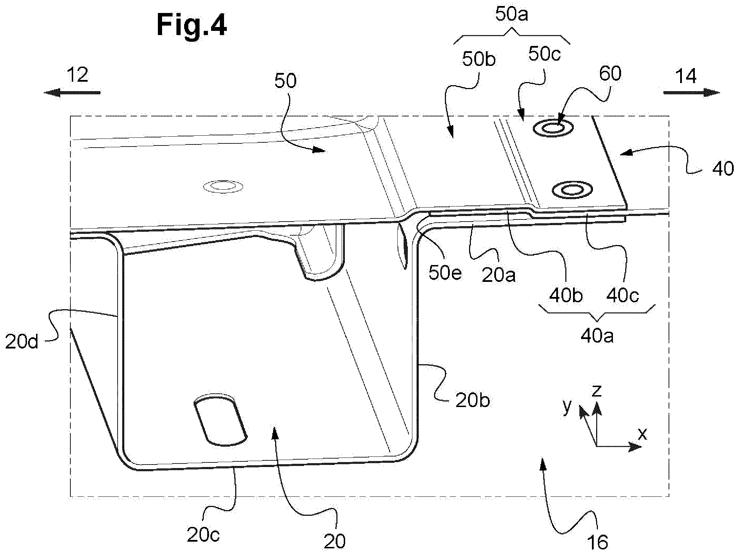

La figure 4 illustre une coupe partielle selon le plan vertical IV faisant apparaître le segment de coupe A-B représenté sur la figure 3.

Ainsi sur la figure 4, on retrouve le châssis 16 et la traverse arrière 20 sur laquelle viennent s'appliquer la partie arrière 40 de plancher 18.

La traverse arrière 20 est profilée en U et elle comprend un fond 20c, deux parois opposées l'une de l'autre sensiblement parallèles, une paroi arrière 20b, et une paroi avant 20d. la traversent arrière 40 présent au surplus une aile transversale libre 20a prolongeant la paroi arrière 20b en s'étendant en retour vers l'extrémité arrière 14.

La partie arrière 40 du plancher 18 vient en appui sur le châssis 16.

Aussi, avant que la traverse 50 ne soit appliquée sur le châssis 16, la première bordure transversale avant 40a vient en applique à plat sur l'aile transversale libre 20a.

La première bordure transversale avant 40a présente une première zone libre transversale 40b s'étendant en décrochement par rapport à une première zone transversale 40c, située en retrait et longeant ladite première zone libre transversale 40b. on observera que la zone transversale 40c s'étend dans le même plan que le plan moyen défini par la partie arrière 40 du plancher 18.

Le décrochement de la zone libre transversale 40b forme un soyage qui résulte d'une opération de double pliage de la zone libre 40b à sensiblement 90° pour obtenir une zone libre 40b venant s'étendre dans un plan sensiblement parallèle à celui de la zone transversale 40c, décalé d'une distance sensiblement égale à celle de l'épaisseur de la paroi de la partie arrière 40.

La deuxième zone transversale 40c de la première bordure transversale avant 40a vient de la sorte en contact avec l'aile transversale libre 20a, tandis que la première zone libre transversale 40b en décrochement est espacée de l'aile transversale libre 20a.

Plus précisément, la première zone libre transversale 40b en décrochement est décalée, selon une direction verticale, d'une distance sensiblement égale à l'épaisseur de la paroi de la partie arrière 40 du plancher 18.

Par ailleurs, la deuxième bordure transversale arrière 50a de l'allonge 50 est adaptée à venir en applique sur ladite première bordure transversale avant 40a.

Pour ce faire, la deuxième bordure transversale arrière 50a présente une deuxième zone libre transversale 50c et, en arrière de celle-ci, une zone transversale en U 50b définissant un dégagement 50d et longeant la deuxième zone libre transversale 50c. La zone transversale en U 50d définit un fond large surélevé par rapport à la deuxième zone libre transversale 50c.

La zone transversale en U 50b présente une profondeur sensiblement égale à deux fois l'épaisseur de la paroi du plancher 18.

Et, la deuxième zone libre transversale 50c présente une largeur sensiblement égale à la largeur de zone transversale en U 50b.

Lorsque la deuxième bordure transversale arrière 50a vient en applique à plat sur la première bordure transversale avant 40a, la deuxième zone libre transversale 50c vient en appui sur la zone transversale 40c, tandis que la première zone libre transversale 40b de la première bordure transversale avant 40a vient se loger à l'intérieur du dégagement 50d de la zone transversale en U 50b.

Pour cela, la première zone libre transversale 40b présente une largeur sensiblement inférieure à la largeur dudit dégagement 50d.

En effet, il est nécessaire que la deuxième zone libre transversale 50b soit assez large pour que la première zone libre transversale 40b en décrochement puisse s'y loger pour assembler les pièces, et que la deuxième zone libre transversale 50c vienne en appui à plat sur la zone transversale 40c, laquelle est située en arrière de la première zone libre transversale 40b.

Ensuite, grâce à la pince de soudage précitée, des points de soudure 60 sont réalisés de proche en proche sur la deuxième zone libre transversale 50c et l'aile libre transversale 20a à travers la deuxième zone transversale 40c en venant pincer les trois épaisseurs entre les deux extrémités libres de la pince.

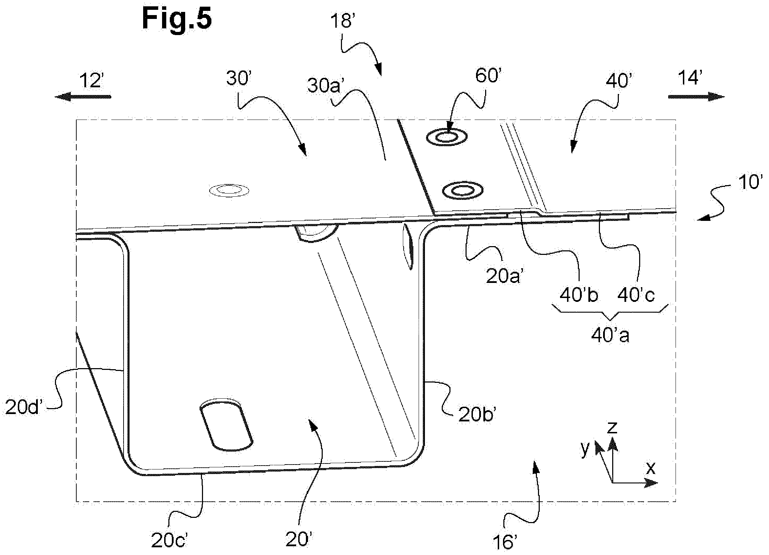

On se référera à présent à la [Fig. 5] illustrant, partiellement, une structure de véhicules automobile 10' obtenue selon un autre mode de mise en œuvre visant la fabrication d'une structure de véhicule automobile, selon une version courte.

En effet, la méthode de fabrication selon l'invention, est également adaptée à la fabrication d'une version courte de véhicule automobile en utilisant des pièces communes aux deux versions, longue et courte. Aussi, les éléments de la [Fig. 5] identiques à ceux de la [Fig. 4] présentent une même référence affectée d'un signe prime : « ' ».

Dans la version courte, le châssis 16' est naturellement plus court par construction et la structure 10' du véhicule automobile ne comprend plus d'allonge.

En revanche, le châssis 16' comprend une traverse arrière 20', où viennent se rejoindre la partie avant 30' et la partie arrière 40' du plancher 18'. Et la traversent arrière 20' est identique à la traversent arrière 20 représentée sur la [Fig. 4] pour les versions longues de véhicules.

Les étapes de la méthode de fabrication selon invention restent les mêmes pour la version courte que pour la version longue, excepté qu'on ne fournit pas d'allonge.

On retrouve sur la figure 5, la traverse 20' présentant une aile transversale libre 20a' s'étendant vers ladite extrémité arrière 14'.

La partie avant 30' du plancher comprend une première bordure transversale arrière 30a' venant directement en applique à plat sur l'aile transversale libre 20a'.

Quant à la première zone transversale libre 40b' de la première bordure avant 40a' en décrochement, elle vient en applique à plat sur la première bordure transversale arrière 30a', tandis que la deuxième zone transversale 40c' de la première bordure transversale avant 40a' vient en appui contre l'aile transversale libre 20a'. Ainsi, les deux épaisseurs de paroi de plancher, la première zone transversale avant 40b' et la bordure transversale arrière 30a' en applique l'une contre l'autre, et l'ensemble en applique contre l'aile transversale libre 20a' vont pouvoir être reliées ensemble par soudure.

Partant, les points de soudure 60' sont réalisés au niveau de la première zone libre transversale avant 40b' de la partie arrière du plancher avec l'aile transversale libre 20a' à travers la première bordure transversale arrière 30a'.

Ainsi par rapport au mode de réalisations principal, les points de soudure 60' sont décalés à la première zone transversale libre 40b'.

La méthode de fabrication selon l'invention permet de réaliser alternativement ou parallèlement, une version de véhicule automobile long ou court sans changer, ni les méthodes de mise en œuvre ou les pièces essentielles puisqu'elles sont standardisées.

## Revendications

1. Méthode de fabrication d'une structure de véhicule automobile allongé, comprenant les étapes suivantes :
- on fournit un châssis (16) s'étendant longitudinalement entre une extrémité avant (12) et une extrémité arrière (14), ledit châssis comprenant une traverse (20) présentant une aile transversale libre (20a) s'étendant vers ladite extrémité arrière (14),
- on fournit un plancher (18) comprenant une partie avant (30) présentant une première bordure transversale arrière (30d) et une partie arrière (40) présentant une première bordure transversale avant (40a) venant en applique sur ladite aile transversale libre (20a), ladite première bordure transversale avant (40a) présentant une première zone libre transversale (40b) en décrochement par rapport à une première zone transversale (40c) longeant la première zone libre transversale (40b),
- on fournit une allonge (50) comprenant une deuxième bordure transversale arrière (50a) adaptée à venir en applique sur ladite première bordure transversale avant (40a) et une deuxième bordure transversale avant (50d) adaptée à venir en applique sur la première bordure transversale arrière (30d) pour relier ensemble ladite partie avant (30) et ladite partie arrière (40) de plancher,
- on soude ensemble par points la deuxième bordure transversale arrière (50a) et ladite aile libre transversale (20a) à travers ladite première bordure transversale avant (40a),
**caractérisée en ce que** la deuxième bordure transversale arrière (50a) présente une deuxième zone libre transversale (50c) et une zone transversale en U (50b) définissant un dégagement (50d) longeant la deuxième zone libre transversale,
et **en ce qu'**on soude ensemble ladite deuxième zone libre transversale (50c) et ladite aile libre transversale (20a) à travers ladite première zone transversale (40c) de ladite première bordure avant (40a).

2. Méthode de fabrication selon la revendication 1, **caractérisée en ce que** ladite première zone libre transversale (40b) de ladite première bordure transversale avant (40a) vient se loger à l'intérieur dudit dégagement (50e).

3. Méthode de fabrication selon la revendication 1 ou 2, **caractérisée en ce que** ladite première zone transversale (40c) de la première bordure transversale avant (40) vient en contact avec ledit châssis (16), tandis que la première zone libre transversale (40b) en décrochement est écartée dudit châssis.

4. Méthode de fabrication selon l'une quelconque des revendications 1 à 3, **caractérisée en ce que** la première zone libre transversale en décrochement (40b) est décalée d'une dimension sensiblement égale à l'épaisseur du plancher.

5. Méthode de fabrication selon l'une quelconque des revendications 1 à 4, **caractérisée en ce que** la deuxième zone libre transversale (50c) présente une largeur sensiblement égale à la largeur de zone transversale en U (50b).

6. Structure de véhicule automobile allongé, comprenant :
- un châssis (16) s'étendant longitudinalement entre une extrémité avant (12) et une extrémité arrière (14), ledit châssis comprenant une traverse (20) présentant une aile transversale libre (20a) s'étendant vers ladite extrémité arrière (14),
- un plancher (18) comprenant une partie avant (30) présentant une première bordure transversale arrière (30d) et une partie arrière (40) présentant une première bordure transversale avant (40a) venant en applique sur ladite aile transversale libre (20a), ladite première bordure transversale avant (40a) présentant une première zone libre transversale (40b) en décrochement par rapport à une première zone transversale (40c) longeant la première zone libre transversale (40b),
- une allonge (50) comprenant une deuxième bordure transversale arrière (50a) adaptée à venir en applique sur ladite première bordure transversale avant (40a) et une deuxième bordure transversale avant (50d) adaptée à venir en applique sur la première bordure transversale arrière (30d) pour relier ensemble ladite partie avant (30) et ladite partie arrière (40) de plancher, la deuxième bordure transversale arrière (50a) et ladite aile libre transversale (20a) étant soudées ensemble par points à travers ladite première bordure transversale avant (40a),
**caractérisée en ce que** la deuxième bordure transversale arrière (50a) présente une deuxième zone libre transversale (50c) et une zone transversale en U (50b) définissant un dégagement (50d) longeant la deuxième zone libre transversale,
ladite deuxième zone libre transversale (50c) et ladite aile libre transversale (20a) étant soudées ensemble à travers ladite première zone transversale (40c) de ladite première bordure avant (40a).

7. Structure de véhicule automobile allongé selon la revendication 6, **caractérisée en ce que** ladite première zone libre transversale (40b) de ladite première bordure transversale avant (40a) vient se loger à l'intérieur dudit dégagement (50e).

8. Structure de véhicule automobile allongé selon la revendication 6 ou 7, **caractérisée en ce que** ladite première zone transversale (40c) de la première bordure transversale avant (40) vient en contact avec ledit châssis (16), tandis que la première zone libre transversale (40b) en décrochement est écartée dudit châssis.

9. Structure de véhicule automobile allongé selon l'une quelconque des revendications 6 à 8, **caractérisée en ce que** la première zone libre transversale en décrochement (40b) est décalée d'une dimension sensiblement égale à l'épaisseur du plancher.

10. Structure de véhicule automobile allongé selon l'une quelconque des revendications 6 à 9, **caractérisée en ce que** la deuxième zone libre transversale (50c) présente une largeur sensiblement égale à la largeur de zone transversale en U (50b).

## Patentansprüche

1. Verfahren zur Herstellung einer Struktur eines verlängerten Kraftfahrzeugs, umfassend die folgenden Schritte:
- Bereitstellen eines Chassis (16), das sich längs zwischen einem vorderen Ende (12) und einem hinteren Ende (14) erstreckt, wobei das Chassis einen Querträger (20) umfasst, der einen freien Querschenkel (20a) aufweist, der sich zu dem hinteren Ende (14) hin erstreckt,
- Bereitstellen eines Bodens (18), umfassend einen vorderen Teil (30), der eine erste hintere Querkante (30d) aufweist, und einen hinteren Teil (40), der eine erste vordere Querkante (40a) aufweist, die auf dem freien Querschenkel (20a) zur Anlage kommt, wobei die erste vordere Querkante (40a) einen ersten freien Querbereich (40b) aufweist, der in Bezug auf einen ersten Querbereich (40c), der an dem ersten freien Querbereich (40b) entlangläuft, abgesetzt ist,
- Bereitstellen eines Verlängerungsstücks (50), umfassend eine zweite hintere Querkante (50a), die dazu angepasst ist, auf der ersten vorderen Querkante (40a) zur Anlage zu kommen, und eine zweite vordere Querkante (50d), die dazu angepasst ist, auf der ersten hinteren Querkante (30d) zur Anlage zu kommen, um den vorderen Teil (30) und den hinteren Teil (40) des Bodens zu verbinden,
- punktweises Zusammenschweißen der zweiten hinteren Querkante (50a) und des freien Querschenkels (20a) durch die erste vordere Querkante (40a) hindurch,
**dadurch gekennzeichnet, dass** die zweite hintere Querkante (50a) einen zweiten freien Querbereich (50c) aufweist und einen U-förmigen Querbereich (50b), der einen Freiraum (50d) definiert, der an dem zweiten freien Querbereich entlangläuft,
und dadurch, dass der zweite freie Querbereich (50c) und der freie Querschenkel (20a) durch den ersten Querbereich (40c) der ersten vorderen Kante (40a) hindurch zusammengeschweißt werden.

2. Verfahren zur Herstellung nach Anspruch 1, **dadurch gekennzeichnet, dass** der erste freie Querbereich (40b) der ersten vorderen Querkante (40a) im Inneren des Freiraums (50e) aufgenommen wird.

3. Verfahren zur Herstellung nach Anspruch 1 oder 2, **dadurch gekennzeichnet, dass** der erste Querbereich (40c) der ersten vorderen Querkante (40) in Kontakt mit dem Chassis (16) gelangt, während der abgesetzte erste freie Querbereich (40b) von dem Chassis beabstandet ist.

4. Verfahren zur Herstellung nach einem der Ansprüche 1 bis 3, **dadurch gekennzeichnet, dass** der abgesetzte erste freie Querbereich (40b) um ein Maß versetzt ist, das im Wesentlichen gleich der Dicke des Bodens ist.

5. Verfahren zur Herstellung nach einem der Ansprüche 1 bis 4, **dadurch gekennzeichnet, dass** der zweite freie Querbereich (50c) eine Breite aufweist, die im Wesentlichen gleich der Breite des U-förmigen Querbereichs (50b) ist.

6. Struktur eines verlängerten Kraftfahrzeugs, umfassend:
- ein Chassis (16), das sich längs zwischen einem vorderen Ende (12) und einem hinteren Ende (14) erstreckt, wobei das Chassis einen Querträger (20) umfasst, der einen freien Querschenkel (20a) aufweist, der sich zu dem hinteren Ende (14) hin erstreckt,
- einen Boden (18), umfassend einen vorderen Teil (30), der eine erste hintere Querkante (30d) aufweist, und einen hinteren Teil (40), der eine erste vordere Querkante (40a) aufweist, die auf dem freien Querschenkel (20a) zur Anlage kommt, wobei die erste vordere Querkante (40a) einen ersten freien Querbereich (40b) aufweist, der in Bezug auf einen ersten Querbereich (40c), der an dem ersten freien Querbereich (40b) entlangläuft, abgesetzt ist,
- ein Verlängerungsstück (50), umfassend eine zweite hintere Querkante (50a), die dazu angepasst ist, auf der ersten vorderen Querkante (40a) zur Anlage zu kommen, und eine zweite vordere Querkante (50d), die dazu angepasst ist, auf der ersten hinteren Querkante (30d) zur Anlage zu kommen, um den vorderen Teil (30) und den hinteren Teil (40) des Bodens zu verbinden, wobei die zweite hintere Querkante (50a) und der freie Querschenkel (20a) durch die erste vordere Querkante (40a) hindurch punktweise zusammengeschweißt sind,
**dadurch gekennzeichnet, dass** die zweite hintere Querkante (50a) einen zweiten freien Querbereich (50c) aufweist und einen U-förmigen Querbereich (50b), der einen Freiraum (50d) definiert, der an dem zweiten freien Querbereich entlangläuft,
wobei der zweite freie Querbereich (50c) und der freie Querschenkel (20a) durch den ersten Querbereich (40c) der ersten vorderen Kante (40a) hindurch zusammengeschweißt sind.

7. Struktur eines verlängerten Kraftfahrzeugs nach Anspruch 6, **dadurch gekennzeichnet, dass** der erste freie Querbereich (40b) der ersten vorderen Querkante (40a) im Inneren des Freiraums (50e) aufgenommen wird.

8. Struktur eines verlängerten Kraftfahrzeugs nach Anspruch 6 oder 7, **dadurch gekennzeichnet, dass** der erste Querbereich (40c) der ersten vorderen Querkante (40) in Kontakt mit dem Chassis (16) gelangt, während der abgesetzte erste freie Querbereich (40b) von dem Chassis beabstandet ist.

9. Struktur eines verlängerten Kraftfahrzeugs nach einem der Ansprüche 6 bis 8, **dadurch gekennzeichnet, dass** der abgesetzte erste freie Querbereich (40b) um ein Maß versetzt ist, das im Wesentlichen gleich der Dicke des Bodens ist.

10. Struktur eines verlängerten Kraftfahrzeugs nach einem der Ansprüche 6 bis 9, **dadurch gekennzeichnet, dass** der zweite freie Querbereich (50c) eine Breite aufweist, die im Wesentlichen gleich der Breite des U-förmigen Querbereichs (50b) ist.

## Claims

1. Method for manufacturing a structure of an elongated motor vehicle, comprising the following steps:
- providing a chassis (16) extending longitudinally between a front end (12) and a rear end (14), said chassis comprising a crossmember (20) having a free transverse flange (20a) extending towards said rear end (14),
- providing a floor (18) comprising a front part (30) having a first rear transverse edge (30d) and a rear part (40) having a first front transverse edge (40a) coming into contact with said free transverse flange (20a), said first front transverse edge (40a) having a first transverse free zone (40b) set back from a first transverse zone (40c) running alongside the first transverse free zone (40b),
- providing an extender (50) comprising a second rear transverse edge (50a) designed to come into contact with said first front transverse edge (40a) and a second front transverse edge (50d) designed to come into contact with the first rear transverse edge (30d) in order to connect together said front part (30) and said rear part (40) of the floor,
- spot-welding together the second rear transverse edge (50a) and said transverse free flange (20a) across said first front transverse edge (40a),
**characterized in that** the second rear transverse edge (50a) has a second transverse free zone (50c) and a U-shaped transverse zone (50b) defining a clearance (50d) running alongside the second transverse free zone,
and **in that** said second transverse free zone (50c) and said transverse free flange (20a) are welded together across said first transverse zone (40c) of said first front edge (40a).

2. Manufacturing method according to Claim 1, **characterized in that** said first transverse free zone (40b) of said first front transverse edge (40a) is housed inside said clearance (50e).

3. Manufacturing method according to Claim 1 or 2, **characterized in that** said first transverse zone (40c) of the first front transverse edge (40) comes into contact with said chassis (16), while the first set-back transverse free zone (40b) is spaced apart from said chassis.

4. Manufacturing method according to any one of Claims 1 to 3, **characterized in that** the first set-back transverse free zone (40b) is offset by a dimension substantially equal to the thickness of the floor.

5. Manufacturing method according to any one of Claims 1 to 4, **characterized in that** the second transverse free zone (50c) has a width substantially equal to the width of the U-shaped transverse zone (50b).

6. Structure of an elongated motor vehicle, comprising:
- a chassis (16) extending longitudinally between a front end (12) and a rear end (14), said chassis comprising a crossmember (20) having a free transverse flange (20a) extending towards said rear end (14),
- a floor (18) comprising a front part (30) having a first rear transverse edge (30d) and a rear part (40) having a first front transverse edge (40a) coming into contact with said free transverse flange (20a), said first front transverse edge (40a) having a first transverse free zone (40b) set back from a first transverse zone (40c) running alongside the first transverse free zone (40b),
- an extender (50) comprising a second rear transverse edge (50a) designed to come into contact with said first front transverse edge (40a) and a second front transverse edge (50d) designed to come into contact with the first rear transverse edge (30d) in order to connect together said front part (30) and said rear part (40) of the floor, the second rear transverse edge (50a) and said transverse free flange (20a) being spot-welded together across said first front transverse edge (40a),
**characterized in that** the second rear transverse edge (50a) has a second transverse free zone (50c) and a U-shaped transverse zone (50b) defining a clearance (50d) running alongside the second transverse free zone,
said second transverse free zone (50c) and said transverse free flange (20a) being welded together across said first transverse zone (40c) of said first front edge (40a).

7. Structure of an elongated motor vehicle according to Claim 6, **characterized in that** said first transverse free zone (40b) of said first front transverse edge (40a) is housed inside said clearance (50e).

8. Structure of an elongated motor vehicle according to Claim 6 or 7, **characterized in that** said first transverse zone (40c) of the first front transverse edge (40) comes into contact with said chassis (16), while the first set-back transverse free zone (40b) is spaced apart from said chassis.

9. Structure of an elongated motor vehicle according to any one of Claims 6 to 8, **characterized in that** the first set-back transverse free zone (40b) is offset by a dimension substantially equal to the thickness of the floor.

10. Structure of an elongated motor vehicle according to any one of Claims 6 to 9, **characterized in that** the second transverse free zone (50c) has a width substantially equal to the width of the U-shaped transverse zone (50b).
